# EUROPEAN PATENT SPECIFICATION

(11) **EP 3 660 397 B1**
(45) Date of publication and mention of the grant of the patent: **21.04.2021**
(21) Application number: 18840599.7
(22) Date of filing: 09.07.2018
(51) Int. Cl.: F23G 5/50, F23G 5/44, B65F 5/00

(54) **WASTE COMPOSITION ESTIMATION DEVICE, SYSTEM, PROGRAM, METHOD, AND DATA STRUCTURE**
VORRICHTUNG, SYSTEM, PROGRAMM, VERFAHREN UND DATENSTRUKTUR ZUR SCHÄTZUNG DER ABFALLZUSAMMENSETZUNG
DISPOSITIF, SYSTÈME, PROGRAMME, PROCÉDÉ ET STRUCTURE DE DONNÉES D'ESTIMATION DE COMPOSITION DE DÉCHETS

(30) Priority: 31.07.2017 JP 2017148374
(43) Date of publication of application: 03.06.2020
(73) Proprietor: Ebara Environmental Plant Co., Ltd., Tokyo 144-0042 (JP)
(72) Inventor: MATSUOKA, Kei, Tokyo 144-0042 (JP); KAWACHI, Takahiro, Tokyo 144-0042 (JP); ICHIKAWA, Junichi, Tokyo 144-0042 (JP); YOKOYAMA, Akiko, Tokyo 144-0042 (JP); UMEZAWA, Toshiyuki, Tokyo 144-0042 (JP)
(74) Representative: Emde, Eric
(86) International application number: PCT/JP2018/025805
(87) International publication number: WO 2019/026551

(56) References cited:
- EP-A1- 1 048 900
- DE-A1-102010 031 528
- JP-A- H1 038 243
- JP-A- H07 301 413
- JP-A- 2011 027 349
- JP-A- 2015 143 139
- JP-A- 2017 109 161

## Description

### TECHNICAL FIELD

The present invention relates to a device, a system, a program, and a method for estimating composition of waste in a waste treatment plant.

### BACKGROUND ART

In a waste treatment plant, waste including various components, such as household garbage and bulky crushed waste, pruned branches, sludge, and so on, are thrown into a waste pit. The waste including the various components is thrown into an incinerator together, and an incineration process is applied thereto in the incinerator. In this regard, in the case that the composition of the waste thrown into the incinerator changes suddenly, when incinerating the waste, temperature in the incinerator may change suddenly, or a poisonous gas or material such as dioxin or the like may be generated; and, this may result in an environmental problem.

For dealing with the above problem, for example, in JP 5 025 120 A, general waste materials and heterogeneous waste materials, which are thrown into a waste pit, are discriminated based on colors thereof, and the waste in the pit is stirred by controlling a crane to thereby make composition of the waste uniform.

However, in the technique disclosed in JP 5 025 120 A, it is difficult to discriminate between waste materials such as kitchen waste, plastics, and so on which have similar colors and different composition, and it is also difficult to discriminate between waste materials such as comforters and so on which have similar composition and different colors.

Further, reference is made to EP 1 048 900 A1 related to a combustion control method using a CCD camera for scanning the refuse seized by a gripper and/or deposited in a feed shaft for the burner, with image analysis of the camera image for identifying the refuse material, with corresponding control of at least one combustion parameter.

### SUMMARY OF INVENTION

### TECHNICAL PROBLEM

The present technique is developed in view of the above problem; and an object to be achieved by the technique is to provide a device, a system, a program, and a method which can estimate composition of waste even if waste materials having different components and similar colors and waste materials having similar components and different colors are mixed in waste.

### SOLUTION TO PROBLEM

In accordance with the invention, a device and a method as set forth in claims 1 and 8, respectively are provided as well as a program, that makes a processor in a waste treatment plant to perform the method according to claim 8. Further embodiments of the invention are inter alia disclosed in the dependent claims.

(Mode 1) According to mode 1, a device is provided, and the device comprises: a training data generation unit which generates training data associated with a captured image of waste stored in a waste pit; a model construction unit which constructs a model by performing learning using the training data; and an estimation unit which inputs, in the model, data of a new captured image of waste stored in a waste pit, and obtains a value representing composition of the waste corresponding to the new image.

(Mode 2) According to mode 2, the mode comprises the device of mode 1, wherein the estimation unit further divides the captured new image of the waste into plural blocks; regarding each of the blocks, outputs a value representing composition of the waste corresponding to the new image; and generates an inference map which associates outputted values representing composition of the waste with the respective blocks.

(Mode 3) According to mode 3, the mode comprises the device of mode 2, wherein the device further comprises an instruction unit which generates, based on the inference map, at least one of an instruction to a crane control device which controls a crane and an instruction to a combustion control device which controls an incinerator.

(Mode 4) According to mode 4, the mode comprises the device of mode 3, wherein the instruction to the crane control device is an instruction to a crane to move waste stored in the waste pit; and the instruction to the combustion control device is an instruction required to incinerate waste thrown into the incinerator.

(Mode 5) According to mode 5, the mode comprises the device of any one of modes 1 to 4, wherein the training data is collected from at least one of a value representing a characteristic of waste identified based on operation history of a waste treatment plant and a label representing result of classification of composition of waste, wherein classification is performed by an operator based on image data of the waste in the waste pit.

(Mode 6) According to mode 6, the mode comprises the device of any one of modes 1-5, wherein the value representing composition of the waste is an index that represents flammability of the waste.

(Mode 7) According to mode 7, a waste treatment plant system is provided, and the system comprises: a training data generation unit which generates training data associated with a captured image of waste stored in a waste pit; a model construction unit which constructs a model by performing learning using the training data; an estimation unit which divides a new captured image of waste stored in a waste pit into plural blocks, inputs data of the respective blocks of the new image in the model, and generates an inference map which associates values representing composition of the waste corresponding to the new image with the respective blocks; and an instruction unit which generates, based on the inference map, at least one of an instruction to a crane control device which controls a crane and an instruction to a combustion control device which controls an incinerator.

(Mode 8) According to mode 8, a method for estimating composition of waste stored in a waste pit of a waste treatment plant is provided, and the method comprises: a step for generating training data associated with a captured image of waste stored in a waste pit; a step for constructing a model by performing learning using the training data; and a step for inputting, in the model, data of a new captured image of waste stored in a waste pit, and obtaining a value representing composition of the waste corresponding to the new image.

(Mode 9) According to mode 9, a program is provided, and the program is that which makes a processor in the waste treatment plant to perform the method according to mode 8.

### BRIEF DESCRIPTION OF DRAWINGS

Fig. 1 is a schematic diagram of a waste treatment plant relating to an embodiment.
Fig. 2 is a schematic configuration diagram of a waste treatment plant system relating to an embodiment.
Fig. 3 is a function configuration diagram of an information processing device of a waste treatment plant relating to an embodiment.
Fig. 4 is an example construction of an inference map which shows correspondence between output data and positions in a waste pit.
Fig. 5 is a flow chart showing operation of a waste treatment plant system relating to an embodiment.

### DESCRIPTION OF EMBODIMENTS

In the following description, embodiments of the present invention will be explained with reference to the figures.

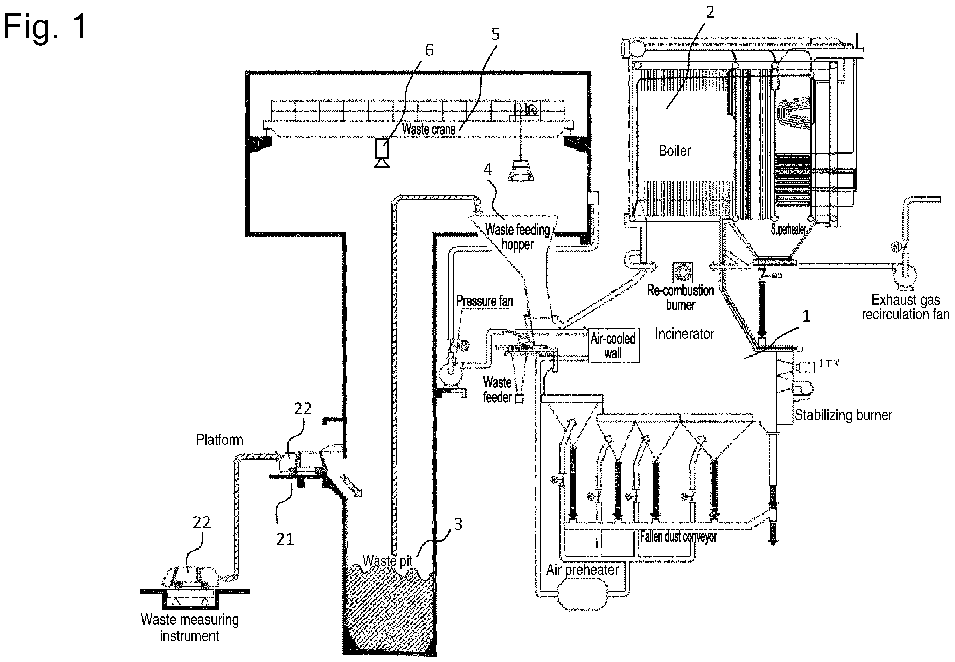

Fig. 1 shows a schematic diagram of a waste treatment plant according to an embodiment; and, in Fig. 1, 1 denotes an incinerator for incinerating waste, 2 denotes a waste heat boiler, 3 denotes a pit for storing waste, 4 denotes a hopper, 5 denotes a crane for moving waste from the pit 3 to the hopper 4, and 6 denotes an imaging device for capturing an image of a surface of waste stored in the pit 3. Also, in Fig. 1, 21 denotes a platform, wherein waste collected by a waste collecting vehicle 22 is thrown into the waste pit 3 from the platform 21.

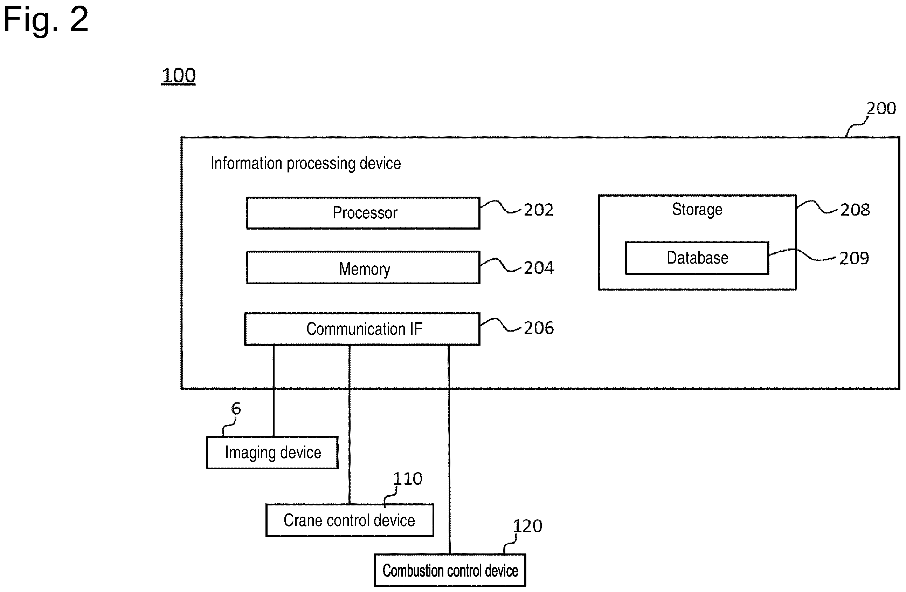

Fig. 2 shows a configuration diagram of a system 100 for controlling operation of the waste treatment plant shown in Fig. 1. The waste treatment plant system 100 is a system configured to estimate, based on image data captured by the imaging device 6, a value representing composition of waste, and control, based on the value representing estimated composition of the waste, operation of the waste treatment plant. The waste treatment plant system 100 comprises an information processing device 200, the imaging device 6 for capturing an image in the waste pit 3 (shown in Fig. 1), a crane control device 110, and a combustion control device 120. The information processing device 200 is communicably and mutually coupled to the imaging device 6, the crane control device 110, and the combustion control device 120, via a network such as an in-plant LAN (Local Area Network) or the like constructed in the waste treatment plant, for example. The information processing device 200 may be constructed by use of a personal computer, a workstation, or a server device, or may be constructed by use of a portable computer such as a tablet terminal. In this regard, it should be reminded that the above construction is an example, and the construction to which the present invention is applicable is not limited to the construction shown in Fig. 2. For example, the number of each of the imaging device 6, the crane control device 110, the combustion control device 120, and the information processing device 200 may be two or more than two.

The imaging device 6 is a device for capturing an image of a surface of waste piled in the waste pit 3, and obtaining image data representing the inside of the pit 3. For example, the imaging device 6 may be an RGB camera for capturing a shape and chromatic image of waste, a near infrared camera for capturing a near infrared image of waste, or a 3D camera or an RGB-D camera for capturing a three dimensional image of waste.

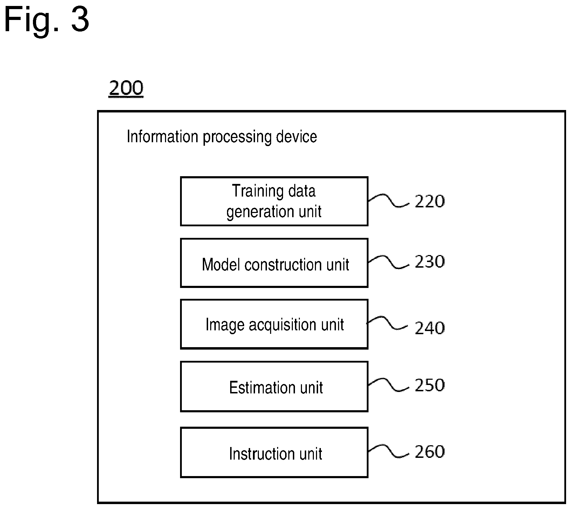

The information processing device 200 comprises a processor 202, a memory 204, a communication interface 206, and a storage 208. In an embodiment, the information processing device 200 generates, based on image data that is transmitted from the imaging device 6 and represents the inside of the waste pit 3, training data that is to be supplied to a learning model. Details of functions performed in the information processing device 200 will be explained later with reference to Fig. 3.

The processor 202 is constructed to read a program stored in the memory 204 and execute a process according thereto. As a result that the processor 202 executes programs stored in the memory 204, the respective functions in processing, that will be explained later, are realized. In an embodiment, the processor 202 is realized as a device such as a CPU (Central Processing Unit), MPU (Micro Processor Unit), a FPGA (Field-Programmable Gate Array), or the like.

The memory 204 temporarily stores a program and data. The program may be loaded from the storage 208, for example. The data comprises data inputted to the information processing device 200, data generated by the processor 202, and data loaded from the storage 208. In an embodiment, the memory 204 may be realized as a volatile memory such as a RAM (Random Access Memory) or the like. Data stored in the memory 204 comprises image data of waste captured by the imaging device 6, training data generated based on image data of waste, and so on.

The communication interface 206 communicates signals between the imaging device 6, the crane control device 110, the combustion control device 120, and the information processing device 200. In an embodiment, the communication interface 206 receives image data outputted from the imaging device 6, for example. In another embodiment, the communication interface 206 sends an instruction generated by the processor 202 to the crane control device 110 or the combustion control device 120.

The storage 208 holds programs and data permanently. The storage 208 is realized as a nonvolatile storage device such as a ROM (Read-Only Memory), a hard disk device, a flash memory, or the like, for example. The programs stored in the storage 208 comprises a program for generating, based on image data of waste captured by the imaging device 6, training data, and a program for giving an instruction to the crane control device 110 or the combustion control device 120, for example. For example, operation history of the waste treatment plant is stored, in time series, in the storage 208. The operation history of the waste treatment plant includes raw data measured by devices such as plural sensors and so on attached to the waste treatment plant, for example, a temperature sensor for sensing temperature in the incinerator 1 (shown in Fig. 1). Further, the storage 208 comprises a database 209, and the database 209 stores, in time series, process data obtained based on the operation history of the waste treatment plant, for example. In this regard, it should be reminded that the process data may be stored in the memory 204.

The crane control device 110 is a device for controlling operation of the crane 5 (shown in Fig. 1). The crane control device 110 makes the crane 5 to perform operation for stirring waste in the waste pit 3 or conveying waste in the waste pit 3 to the hopper 4 (shown in Fig. 1), in accordance with an instruction transmitted from the information processing device 200. Stirring of waste in the waste pit 3 is operation to grasp a part of waste piled at a block in the waste pit 3 and move the part of waste to a different block in the waste pit, or operation to drop the part of waste grasped by the crane 5 on the same block again. By repeating stirring of waste, the waste materials can be mixed to make the composition of the waste in the waste pit 3 homogeneous. Thus, it becomes possible to make combustion of waste in the incinerator 1 homogeneous.

The combustion control device 120 is a device for controlling combustion in the incinerator 1 (shown in Fig. 1). The combustion control device 120 controls time of combustion and/or temperature of combustion in the incinerator 1, or controls the quantity of air supplied to the incinerator 1, in accordance with an instruction transmitted from the information processing device 200.

Fig. 3 is a block diagram showing a functional construction of the information processing device 200 relating to an embodiment of the present invention. The information processing device 200 relating to the present embodiment comprises a training data generation unit 220, a model construction unit 230, an image acquisition unit 240, an estimation unit 250, and an instruction unit 260. Each of the units 220 to 260 represents a function realized by reading a computer program in the memory 204 and executing the computer program by the processor 202 shown in Fig. 2.

According to the present embodiment, a learning model is constructed by generating training data from image data of waste included in operation history of the waste treatment plant and so on, collecting plural sets, each set comprising the image data of waste and the training data, and machine-learning the sets. Thereafter, the image data of the waste, which is an object relating to estimation, is inputted to the constructed learning model, an output (result of inference) is obtained therefrom, and an inference map is generated based on the output. Further, based on the inference map, instructions are given to the crane control device 110 (shown in Fig. 2) and the combustion control device 120 (shown in Fig. 2). In the following description, operation and so on of each of the units 220-260 will be explained in detail.

The training data generation unit 220 generates training data supplied to the learning model. The training data generation unit 220 generates training data from past or present operation history of the waste treatment plant, that is stored in time series in the database 209 (shown in Fig. 2) that has been predetermined. The database 209 stores, in time series, image data of waste in the waste pit 3 captured by the imaging device 6, and process data corresponding to the image data of waste. The training data generation unit 220 reads, from the database 209, process data corresponding to image data of waste in the waste pit 3, and generates, from the process data, training data for learning. The image data of waste in the waste pit 3 and the process data are associated, for example, by use of time at when the respective data were obtained. That is, past process data is associated with past image data of waste. Training data generated from process data comprises a value representing composition of waste. The value representing composition of waste is an index showing the degree of flammability or non-flammability of waste. The process data comprises at least one of data that shows a waste characteristic collected based on operation history of the waste treatment plant and a label that classifies composition of waste, wherein classification is performed by an operator based on operation history of the waste treatment plant.

The data representing a characteristic of waste may be weight (kg*m/s²) of waste thrown into the pit 3, density (kg/m³), the water content (kg) included in waste thrown into the pit 3, or a quantity of heat (kJ/kg) generated when waste is incinerated, for example. Each of the following matters that the weight is low, the density is low, the water content is low, and the quantity of heat is high indicates that the waste is easy to be incinerated. In general, waste becomes more flammable as the density thereof becomes lower. Thus, waste having the same volume and less weight is more flammable. The volume of waste that the crane 5 can grasp each time is approximately the same; so that, if the weight of waste grasped by the crane 5 is measured, the flammability of the waste can be determined.

Further, for example, the database 209 stores, in advance, data representing a characteristic of waste that is based on past operation history of the waste treatment plant. For example, the database 209 stores, in advance, information of the quantity of heat generated in the waste treatment plant with respect to each of months over a past predetermined period (for example, three years). By referring to the history information of the quantity of generated heat per each month stored in the database 209, an actual quantity of heat generated from waste, if the waste shown in an image of waste in the waste pit 3 is thrown into the incinerator 1, can be specified.

In the present embodiment, image data of waste in the waste pit 3 is associated with data representing a characteristic of the waste that is identified when the waste is thrown into the waste pit 3. Then, the training data generation unit 220 applies shaping and so on to the data representing the identified characteristic of the waste, and generates training data that corresponds to image data of waste and represents composition of the waste.

On the other hand, the label for classifying waste by composition of waste is specified by classifying composition of the waste shown in the image by an operator by performing visual observation, based on past data of an image of the waste stored in the database 209. For example, in the case that an operator has judged that waste shown in an image comprises high-calorific value waste, label "H" is assigned thereto; label "M" is assigned if the waste is judged to be that comprising middle-calorific value waste; and label "L" is assigned if the waste is judged to be that comprising low-calorific value waste. The assigned label is inputted to the information processing device 200 via an input interface which is not shown in the figures, and stored in the database 209.

In the present embodiment, a label determined by classifying, by visual observation by an operator, composition of waste in image data which is captured by the imaging device 6 and represents the waste in the waste pit 3 is collected as training data.

In this manner, the training data generation unit 220 obtains, from operation history of the waste treatment plant, process data corresponding to an image of waste in the waste pit 3, and generates training data from the process data. The training data generation unit 220 collects plural sets, each set comprising data of an image of waste and training data that corresponds to the image of the waste and includes a value representing composition of the waste, and stores them as learning data in the memory 204.

It should be reminded that the training data generation unit 220 may be constructed in such a manner that it divides an image of past image data of waste stored in the database 209 into plural blocks, obtains, with respect to respective divided blocks, process data corresponding to the image, and generates training data from the obtained process data. In such a case, the training data generation unit 220 assigns block numbers to the respective divided blocks, and stores values representing composition of the waste, together with the block numbers, in the memory 204, for example. Thus, the training data generation unit 220 can generate a map of training data which shows the degrees of flammability with respect to waste in respective blocks in the pit 3.

The model construction unit 230 constructs a model (a function) by machine-learning generated training data. The model is constructed in such a manner that it outputs a correct output corresponding to a new input when the new input is given. The model construction unit 230 has a predetermined function y=f(x,θ). In the function, the input x is image data of waste in the waste pit 3, the output y is a value representing composition of the waste, and θ is an internal parameter of the function. The model construction unit 230 gives plural sets, each set comprising an input x and an output y, to be used for machine-learning to adjust the internal parameter θ, to make it possible to obtain a correct output. The input x, that is given for machine-learning, is image data of waste in the waste pit 3 that is generated by the training data generation unit 220 and collected from operation history of the waste treatment plant; and the output y is training data corresponding to the input x. In an image of image data of the waste in the waste pit 3, that is given as an input x for machine-learning, waste components having various shapes and various colors are shown. The model construction unit 230 finds relationship between image data and training data by machine-learning plural sets of the data of various images and training data corresponding to the data of the various images, and adjusts the internal parameter θ of the model. As a result, the model is constructed in such a manner that, even if a new input that is different from an input x that was given previously is given, it outputs a correct output corresponding to the new input. In this regard, the algorithm used for learning may be at least one of statistical estimation, reinforcement learning, and deep learning that use linear regression, Boltzmann Machines, a neural network, Support Vector Machine, Bayesian network, sparse regression, a decision tree, and/or random forests.

The image acquisition unit 240 obtains image data of waste in the waste pit 3 for inputting it to a constructed model. The image acquisition unit 240 receives image data of waste in the waste pit 3 from the imaging device 6 periodically, or in response to a trigger that may be an event of issuance of a request to the crane 5 to throw waste into the pit 3, and stores the image data in the memory 204.

The estimation unit 250 obtains new image data of waste from the memory 204, and inputs the new image data of waste to the constructed model to obtain output data. The output data is a value that corresponds to the new imaged data and represents composition of the waste, for example, data representing a characteristic of the waste.

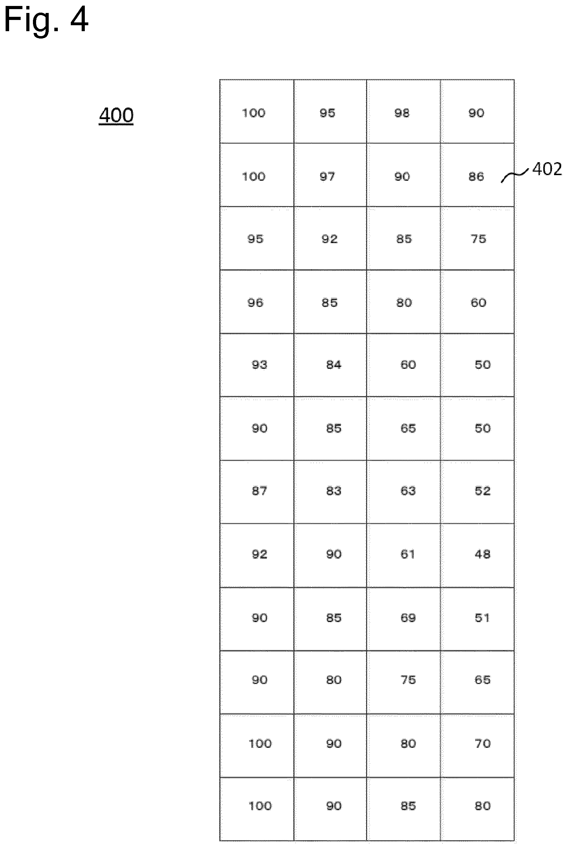

The estimation unit 250 may further generate an inference map which shows correspondence between obtained output data and positions, that relate to the output data, in the waste pit 3. The estimation unit 250 divides a new image obtained by the image acquisition unit 240 into plural blocks, and inputs respective data of the plural divided blocks of the new image to the constructed model to obtain output data for each of the blocks. Fig. 4 shows an example of an inference map 400 constructed by dividing a surface of the waste pit 3 into plural blocks 402. In the example shown in Fig. 4, the surface of the waste pit 3 is divided into four in a lateral direction, and twelve in a longitudinal direction, so that the inference map 400 comprises a total of forty eight blocks 402. It should be reminded that the estimation unit 250 can also generate an inference map in a three dimensional manner, by using a previously generated map.

For example, output data is shown in each block 402 which is a component of the inference map 400. In the example shown in Fig. 4, the output data is an index representing the degree of flammability of waste (no unit thereof in Fig. 4). For example, it shows that the waste is more flammable as the value of the index is larger. The output data described in each block 402 is not limited to that shown in Fig. 4, so that the output data may represent a different matter, for example, weight (kg*m/s²) of waste, density (kg/m³) of waste, the water content (kg) included in waste, or a quantity of heat (kJ/kg) generated, or may represent any combination of the above matters. The output data shown in each block 402, which is a component of the inference map 400, may comprise plural kinds of output data. The inference map 400 is updated/recorded each time when change to the image data obtained by the image acquisition unit 240 occurs, or periodically. Further, the inference map 400 may be displayed visually on a display which is not shown in the figures.

Further, in each block 402 which is a component of the inference map 400, a value (a label, a flag, etc.) that is extracted based on output data may be displayed, instead of displaying the output data itself. For example, a label, that is determined by performing classification based on the magnitude of output data, is shown in each block 402. For example, in the case that output data represents the water content of waste, label "L (or low-calorific value waste)" is assigned to a block with respect to which the water content is high, label "M (or standard-calorific value waste)" is assigned to a block with respect to which the water content is average, and label "H (or high-calorific value waste)" is assigned to a block with respect to which the water content is low. Also, for example, a flag, that is obtained based on the magnitude of output data, is shown in each block 402. For example, in the case that output data represents a quantity of generated heat, flag "OK" is assigned if it is judged that the quantity of heat generated from waste is equal to or more than a predetermined quantity and the waste is suitable to be thrown into the incinerator 1, and flag "NG" is assigned if it is judged that the quantity of heat generated from waste is less than the predetermined quantity and the waste is not suitable to be thrown into the incinerator 1. Also, in the case that there are plural kinds of output data corresponding to a single block 402, it may be possible to extract a new value, that is to be shown in each block 402, from the plural kinds of output data.

According to the present technique, composition of waste corresponding to new image data is estimated when the new image data is inputted, by using a model which is constructed in such a manner that it outputs a correct value (a value representing composition of the waste) corresponding to the new image data. Thus, by collecting new image data of waste and inputting the image data to the learning model, estimation of composition of waste corresponding to the new image data can be performed. Further, even in the case that waste materials which have similar colors and different composition and waste materials which do not have similar colors and have the same composition exist in the pit 3, the composition of waste can be estimated more accurately, compared with the case that the composition of waste is estimated based only on their colors. Further, according to the present technique, since composition of waste is estimated mechanically by use of a learning model, composition of waste can be estimated even if there is no expert operator, or accuracy of judgment, that was made by an operator by performing visual observation of composition of waste conventionally, can be supported. Further, by periodically performing additional learning and/or relearning by using new image data and process data corresponding thereto, it becomes possible to correspond to change in composition of waste due to aging.

Also, according to the present technique, the inside of the waste pit 3 is divided into plural blocks 402, and an inference map 400, which shows values and so on that represent composition of waste with respect to each block 402, is generated. An operator or the information processing device 200 can grasp, regarding waste in the waste pit 3, composition with respect to each block 402 by referring to the inference map 400. Thus, it becomes possible to grasp distribution with respect to composition of waste, in relation to positions.

The instruction unit 260 gives, based on the inference map 400, an instruction to the crane control device 110 (shown in Fig. 2). More specifically, the instruction unit 260 generates, based on the inference map 400, an instruction for moving waste that designates a block in the waste pit 3 from which the waste should be moved, and a block to which the waste should be moved, or an instruction for feeding waste that designates a block in the waste pit 3 that relates to the waste that is to be thrown into the incinerator 1 (shown in Fig. 1), and transmits the instruction to the crane control device 110. The crane control device 110 controls, in accordance with the instruction, moving of the waste in the waste pit 3 by the crane 5. The instruction unit 260 instructs, by use of values shown in the inference map 400, moving of the waste in such a manner that the composition of the waste materials in the pit 3 is made to be uniform, or similar to the composition of the waste materials that were thrown into the incinerator 1 last time.

Further, the instruction unit 260 gives an instruction to the combustion control device 120 (shown in Fig. 2), based on the inference map 400. More specifically, the instruction unit 260 generates an instruction, that is necessary for incineration of the waste fed to the incinerator 1, by use of feed information that relates to a block in the inference map 400 that relates to waste that has thrown into the incinerator 1 and a value shown in the block, for example, output data, and transmits the instruction to the combustion control device 120. The combustion control device 120 performs, in accordance with the instruction, combustion control of the incinerator 1 in such a manner that temperature of combustion, time of combustion, and the quantity of air in the incinerator 1 are made to be appropriate for the composition of the waste thrown into the incinerator 1.

It should be reminded that the above-explained embodiments are not those for limiting the present invention. For example, the instruction unit 260 may be implemented in a device other than the information processing device 200, for example, in the crane control device 110. In such a case, the inference map 400 generated in the information processing device 200 is transmitted to the crane control device 110, and the crane control device 110 generates an instruction for feeding of waste that designates a block in the inference map 400 that relates to waste that is to be thrown into the incinerator 1, and controls operation of the crane 5 thereby. Further, the crane control device 110 generates, by use of information of the position of the block which corresponds to the waste thrown into the incinerator 1 and a value shown in the block, a control instruction to the combustion control device 120.

In another construction, the instruction unit 260 may be implemented in both the crane control device 110 and the combustion control device 120, for example. In such a case, the inference map 400 generated in the information processing device 200 is transmitted to the crane control device 110, and the crane control device 110 generates an instruction for feeding of waste that designates a block in the inference map 400 that relates to waste that is to be thrown into the incinerator 1, and controls operation of the crane 5 thereby. In addition, the combustion control device 120 receives, from the information processing device 200, the inference map 400, and receives, from the crane control device 110, information of the position of the block which relates to the waste thrown into the incinerator 1. The combustion control device 120 generates, by use of the information of the position of the block which relates to the waste thrown into the incinerator 1 and a value shown in the block, a control instruction to the incinerator 1.

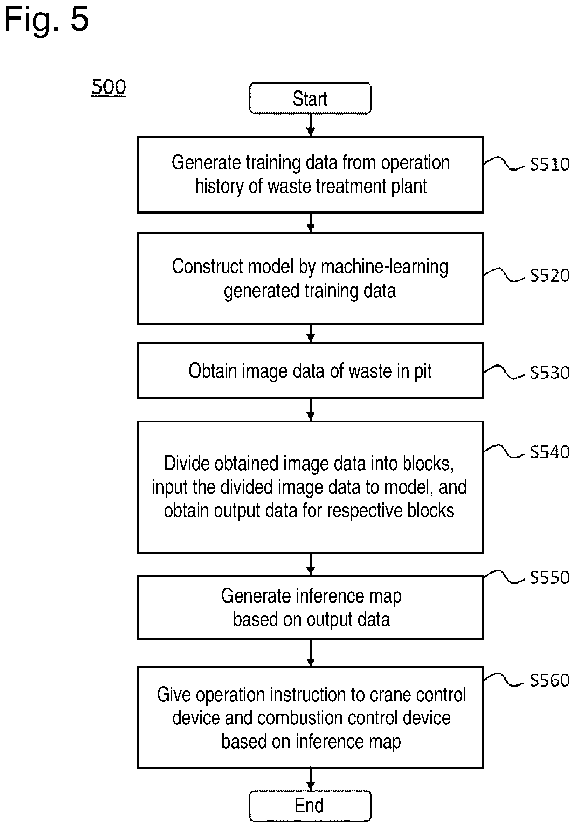

Fig. 5 is a flow chart 500 showing operation of a waste treatment plant system 100 according to an embodiment.

In step S510, the training data generation unit 220 loads operation history of the waste treatment plant, that is being stored in the database 209 (shown in Fig. 2), on the memory 204 (shown in Fig. 2). Thereafter, from the operation history of the waste treatment plant loaded on the memory 204, process data corresponding to image data of waste in the waste pit 3 is collected, and training data is generated based on the process data.

In step S520, the model construction unit 230 performs supervised learning, wherein the image data of waste in the waste pit 3 and the training data, that is generated in step S510 and corresponds to the image data, are used in the learning, to thereby construct a model in which an internal parameter of a function that the model construction unit 230 has is adjusted.

In step S530, the image acquisition unit 240 obtains image data of waste in the waste pit 3, that is captured by the imaging device 6.

In step S540, the estimation unit 250 divides the image data of waste in the waste pit 3, that is obtained by the image acquisition unit 240, into one or more blocks. Thereafter, the estimation unit 250 inputs the respective divided pieces of image data to the model, that is constructed in step S520, and obtains output data for the respective blocks.

In step S550, the estimation unit 250 generates an inference map 400 by associating, with each block, a value representing composition of waste, that is specified by the output data for each block obtained in step S540.

In step S560, the instruction unit 260 gives operation instruction to the crane control device 110 or the combustion control device 120 based on the inference map 400 generated in step S560.

In the above description, embodiments of the present invention are explained; and the above embodiments of the present invention are those used for facilitating understanding of the present invention, and are not those for limiting the present invention.

Further, within the scope that at least part of the above-stated problems can be solved and/or within the scope that at least part of advantageous effect can be obtained, it is possible to arbitrarily combine embodiments and modified examples, and it is possible to arbitrarily combine components or omit a component/components disclosed in the claims and the specification.

### REFERENCE SIGNS LIST

1 ... Incinerator: 3 ... Pit: 4 ... Hopper: 5 ... Crane: 6 ... Imaging device: 100 ... Waste treatment plant system: 110 ... Crane control device: 120 ... Combustion control device: 200 ... Information processing device: 202 ... Processor: 204 ... Memory: 206 ... Communication interface: 208 ... Storage: 209 ... Database: 220 ... Training data generation unit: 230 ... Model construction unit: 240 ... Image acquisition unit: 250 ... Estimation unit: 260 ... Instruction unit: 400 ... Inference map

## Claims

1. A device (200) comprising:
a training data generation unit (220) adapted to generate training data associated with a captured image of waste stored in a waste pit;
a model construction unit (230) which is adapted to construct a model by performing learning using the training data; and
an estimation unit (250) which is adapted to input, in the model, data of a new captured image of waste stored in a waste pit, and to obtain a value representing composition of the waste corresponding to the new image.

2. The device (200) according to Claim 1, wherein the estimation unit (250) is further adapted to
divide the captured new image of the waste into plural blocks, and, regarding each of the blocks, output a value representing composition of the waste corresponding to the new image; and
generate an inference map (400) which associates outputted values representing composition of the waste with the respective blocks.

3. The device (200) according to Claim 2, further comprising
an instruction unit (260) which is adapted to generate, based on the inference map (400), at least one of an instruction to a crane control device (110) which controls a crane (5) and an instruction to a combustion control device (120) which controls an incinerator (1).

4. The device (200) according to Claim 3, wherein the instruction to the crane control device (110) is an instruction to a crane (5) to move waste stored in the waste pit; and the instruction to the combustion control device (120) is an instruction required to incinerate waste thrown into the incinerator (1).

5. The device (200) according to any one of Claims 1 to 4, the training data is collected from at least one of a value representing a characteristic of waste identified based on operation history of a waste treatment plant, and a label representing result of classification of composition of waste, wherein classification is performed by an operator based on image data of the waste in the waste pit.

6. The device (200) according to any one of Claims 1 to 5, wherein the value representing composition of the waste is an index that represents flammability of the waste.

7. A waste treatment plant system (100) comprising:
the device (200) according to claim 2; and
an instruction unit (260) which is adapted to generate, based on the inference map, at least one of an instruction to a crane control device (110) which controls a crane (5) and an instruction to a combustion control device (120) which controls an incinerator (1).

8. A method for estimating composition of waste stored in a waste pit of a waste treatment plant comprising steps for:
generating training data associated with a captured image of waste stored in a waste pit;
constructing a model by performing learning using the training data; and
inputting, in the model, data of a new captured image of waste stored in a waste pit, and obtaining a value representing composition of the waste corresponding to the new image.

9. A program that makes a processor in a waste treatment plant to perform the method according to Claim 8.

## Patentansprüche

1. Vorrichtung (200), die Folgendes aufweist:
eine Trainingsdatenerzeugungseinheit (220), die ausgebildet ist, um Trainingsdaten zu erzeugen, die mit einem aufgenommenen Bild von Müll assoziiert sind, der in einer Müllgrube aufgenommen ist:
eine Modellerstellungseinheit (230), die ausgebildet ist, um ein Modell durch Ausführung eines Lernvorgangs unter Verwendung der Trainingsdaten zu erstellen; und
eine Schätzeinheit (250), die ausgebildet ist, um in das Modell Daten eines neu aufgenommenen Bildes des Mülls einzugeben, der in einer Müllgrube aufgenommen ist, und um einen Wert, der eine Zusammensetzung des Mülls darstellt, entsprechend dem neuen Bild zu erlangen.

2. Vorrichtung (200) nach Anspruch 1, wobei die Schätzeinheit (250) weiter ausgebildet ist zum
Aufteilen des aufgenommenen neuen Bildes des Mülls in mehrere Blöcke und zum Ausgeben eines Wertes bezüglich jedes der Blöcke, der eine Zusammensetzung des Mülls entsprechend dem neuen Bild darstellt; und Erzeugen einer Wechselwirkungskarte (400), welche ausgegebene Werte, die die Zusammensetzung des Mülls darstellen, mit den entsprechenden Blöcken assoziiert.

3. Vorrichtung (200) nach Anspruch 2, die weiter Folgendes aufweist:
eine Instruktionseinheit (260), die ausgebildet ist, um basierend auf der Wechselwirkungskarte (400) eines von folgendem zu erzeugen: eine Instruktion für eine Kransteuervorrichtung (110), die einen Kran (5) steuert, und eine Instruktion für eine Verbrennungssteuervorrichtung (120), die eine Verbrennungsvorrichtung (1) steuert.

4. Vorrichtung (200) nach Anspruch 3, wobei die Instruktion an die Kransteuervorrichtung (110) eine Instruktion an einen Kran (5) ist, Müll zu bewegen, der in der Müllgrube aufgenommen ist; und wobei die Instruktion an die Verbrennungssteuervorrichtung (120) eine Instruktion ist, die erforderlich ist, um Müll zu verbrennen, der in die Verbrennungsvorrichtung (1) geworfen wurde.

5. Vorrichtung (200) nach einem der Ansprüche 1 bis 4, wobei die Trainingsdaten aus mindestens einem von Folgenden gesammelt werden: einem Wert, der eine Charakteristik des Mülls darstellt, die basierend auf der Betriebshistorie einer Müllbehandlungsanlage identifiziert wurde, und ein Label bzw. eine Markierung, die ein Ergebnis der Klassifizierung der Zusammensetzung des Mülls darstellt, wobei die Klassifizierung durch einen Bediener basierend auf Bilddaten des Mülls in der Müllgrube ausgeführt wird.

6. Vorrichtung (200) nach einem der Ansprüche 1 bis 5, wobei der Wert, der die Zusammensetzung des Mülls darstellt, ein Index ist, der die Brennbarkeit des Mülls darstellt.

7. Müllbehandlungsanlagensystem (100), das Folgendes aufweist:
die Vorrichtung (200) nach Anspruch 2; und
eine Instruktionseinheit (260), die ausgebildet ist, um basierend auf der Wechselwirkungskarte eine Instruktion für eine Kransteuervorrichtung (110), die einen Kran (5) steuert, und/oder eine Instruktion für eine Verbrennungssteuervorrichtung (120) zu erzeugen, die eine Verbrennungsvorrichtung (1) steuert.

8. Verfahren zum Schätzen einer Zusammensetzung von Müll, der in einer Müllgrube einer Abfallbehandlungsanlage aufgenommen ist, welches folgende Schritte aufweist:
Erzeugen von Trainingsdaten, die mit einem aufgenommenen Bild des Mülls assoziiert sind, der in einer Müllgrube aufgenommen ist;
Zusammensetzen eines Modells durch Ausführung eines Lernvorgangs unter Verwendung der Trainingsdaten; und
Eingeben von Daten eines neu aufgenommenen Bildes des Mülls, der in der Müllgrube aufgenommen ist, in das Modell, und Erlangen eines Wertes, der eine Zusammensetzung des Mülls darstellt, entsprechend dem neuen Bild.

9. Programm, welches einen Prozessor in einer Müllbehandlungsanlage veranlasst, das Verfahren nach Anspruch 8 auszuführen.

## Revendications

1. Dispositif (200) comprenant :
une unité de génération de données d'apprentissage (220) adaptée pour générer des données d'apprentissage associées à une image capturée de déchets stockés dans une fosse à déchets ;
une unité de construction de modèle (230) qui est adaptée pour construire un modèle en effectuant un apprentissage en utilisant les données d'apprentissage ; et
une unité d'estimation (250) qui est adaptée pour entrer, dans le modèle, des données d'une nouvelle image capturée de déchets stockés dans une fosse à déchets, et pour obtenir une valeur représentant une composition des déchets correspondant à la nouvelle image.

2. Dispositif (200) selon la revendication 1, dans lequel l'unité d'estimation (250) est en outre adaptée pour
diviser la nouvelle image capturée des déchets en plusieurs blocs, et, s'agissant de chacun des blocs, fournir une valeur représentant une composition des déchets correspondant à la nouvelle image ; et
générer une carte d'inférences (400) qui associe des valeurs sorties représentant la composition des déchets aux blocs respectifs.

3. Dispositif (200) selon la revendication 2, comprenant en outre
une unité d'instructions (260) qui est adaptée pour générer, sur la base de la carte d'inférences (400), au moins une instruction parmi une instruction à un dispositif de commande de grue (110) qui commande une grue (5) et une instruction à un dispositif de commande de combustion (120) qui commande un incinérateur (1).

4. Dispositif (200) selon la revendication 3, dans lequel l'instruction au dispositif de commande de grue (110) est une instruction à une grue (5) de déplacer des déchets stockés dans la fosse à déchets ; et l'instruction au dispositif de commande de combustion (120) est une instruction nécessaire pour incinérer des déchets jetés dans l'incinérateur (1).

5. Dispositif (200) selon l'une quelconque des revendications 1 à 4, les données d'apprentissage sont collectées à partir d'au moins une valeur parmi une valeur représentant une caractéristique de déchets identifiée sur la base d'un historique de fonctionnement d'une usine de traitement de déchets, et d'une étiquette représentant un résultat d'une classification de la composition des déchets, dans lequel la classification est effectuée par un opérateur sur la base de données d'image des déchets dans la fosse à déchets.

6. Dispositif (200) selon l'une quelconque des revendications 1 à 5, dans lequel la valeur représentant la composition des déchets est un indice qui représente l'inflammabilité des déchets.

7. Système d'usine de traitement de déchets (100) comprenant :
le dispositif (200) selon la revendication 2 ; et
une unité d'instructions (260) qui est adaptée pour générer, sur la base de la carte d'inférences, au moins une instruction parmi une instruction à un dispositif de commande de grue (110) qui commande une grue (5) et une instruction à un dispositif de commande de combustion (120) qui commande un incinérateur (1).

8. Procédé destiné à estimer la composition de déchets stockés dans une fosse à déchets d'une usine de traitement de déchets comprenant des étapes de :
génération de données d'apprentissage associées à une image capturée de déchets stockés dans une fosse à déchets ;
construction d'un modèle en effectuant un apprentissage en utilisant les données d'apprentissage ; et
entrée, dans le modèle, de données d'une nouvelle image capturée de déchets stockés dans une fosse à déchets, et obtention d'une valeur représentant la composition des déchets correspondant à la nouvelle image.

9. Programme qui amène un processeur dans une usine de traitement de déchets à exécuter le procédé selon la revendication 8.
